Europäisches Patentamt

European Patent Office

Office européen des brevets

(19)

(11) Numéro de publication : **0 499 006 A1**

# (12) DEMANDE DE BREVET EUROPEEN

(21) Numéro de dépôt : **91402108.4**

(22) Date de dépôt : **26.07.91**

(51) Int. Cl.⁵ : **A23B 7/02, A23B 7/024, A23L 3/015, A23L 3/40, A23L 3/44**

(30) Priorité : **02.08.90 FR 9009909**

(43) Date de publication de la demande :
**19.08.92 Bulletin 92/34**

(84) Etats contractants désignés :
**CH DE ES GB IT LI NL**

(71) Demandeur : **Blaizat, Claude**
**20, rue des Bluets**
**F- 75011 Paris (FR)**

(72) Inventeur : **Blaizat, Claude**
**20, rue des Bluets**
**F- 75011 Paris (FR)**

(54) **Procédé de concentration déshydratation de liquide alimentaire ou autre, son dispositif et le produit obtenu.**

(57) Procédé de concentration, déshydratation et/ou suppression d'au moins un constituant de liquide alimentaire ou autre, dispositif de déshydratation approprié et produit déshydraté correspondant.

Le procédé selon l'invention est remarquable en ce qu'il est réalisé en plusieurs étapes : introduction du liquide à déshydrater (13) dans un réservoir d'alimentation (10), mise sous basse pression de l'enceinte (1) et du dispositif d'adsorption (2) jusqu'à une pression partielle d'air comprise entre 1 et 5 mbar, chauffage du dispositif (4) sur lequel s'écoule le liquide (13), maintien de la pression désirée, arrêt du fonctionnement lorsque le produit désiré est obtenu et mise à la pression atmosphérique du dispositif de déshydratation (2).

Application à l'agro-alimentaire.

FIG.

EP 0 499 006 A1

La présente invention concerne un procédé de concentration, déshydratation et/ou suppression d'au moins un constituant de liquide alimentaire, le dispositif approprié et le produit ainsi obtenu.

L'intérêt de déshydrater ou de concentrer un liquide réside dans le fait de le transformer en son état solide pour pouvoir le conserver dans un état parfait pendant une longue période de stockage. L'exemple le plus connu est celui du lait en poudre.

L'autre intérêt de supprimer un constituant dudit liquide réside dans le fait de pouvoir éliminer certaines substances du liquide, qui devient alors solide, de manière à ce qu'il puisse être consommé par un type de consommateurs réclamant certaines caractéristiques bien précises du produit.

Il existe différentes techniques de déshydratation, de concentration et/ou de suppression d'un élément du liquide.

La technique la plus connue consiste en l'atomisation. Réalisée dans de grandes colonnes industrielles, l'atomisation consiste à faire écouler le liquide sur un cône et à envoyer un important flux d'air chaud dans le sens inverse à l'écoulement dudit liquide. On obtient ainsi une poudre sous réserve que le flux d'air soit assez chaud et que la vitesse du fluide ne soit pas trop grande. L'inconvénient majeur de cette technique consiste en ce qu'un phénomène de cuisson du solide apparaît et qu'une partie des arômes est emportée avec le flux d'air puisque celui-ci est important.

Il existe d'autres techniques qui sont réalisées sous vide. Le liquide s'écoule sur un cône mais la vapeur d'eau est directement pompée au moyen de systèmes du type éjecteur de vapeur. L'inconvénient majeur de ces techniques est que les arômes sont pompés avec la vapeur d'eau.

La présente invention a pour but de remédier à ces différents inconvénients et de créer un nouveau procédé de déshydratation, concentration et/ou suppression d'un élément du liquide, utilisant un nouveau dispositif pour fabriquer des produits déshydratés, concentrés et/ou exempts d'au moins un élément pour fabriquer des produits conservant leurs qualités gustatives et organoleptiques.

Pour atteindre ce but, l'inventeur a l'agréable surprise de retenir le procédé décrit dans le FR-A-2 425 812, qui concerne un procédé pour le traitement thermique en continu de produits alimentaires, qu'il a modifié, et d'utiliser le dispositif décrit dans le FR-A-2 489 101 qui concerne notamment un dispositif de réfrigération d'un produit agricole, qu'il a également modifié.

La présente invention concerne un procédé de concentration, de déshydratation et/ou de suppression d'au moins un constituant de liquide alimentaire ou autre, caractérisé en ce qu'il comprend les étapes suivantes :

a) introduction du liquide à déshydrater dans un réservoir d'alimentation résistant au vide et calorifugé,

b) mise sous basse pression de l'enceinte et du dispositif d'adsorption comportant des moyens de chauffage et de refroidissement où est mis en oeuvre le procédé de l'invention à une pression partielle d'air comprise entre 7 et 50 millibars,

c) chauffage d'au moins un dispositif, disposé à l'intérieur de ladite enceinte, sur lequel va s'écouler ledit liquide à déshydrater, chauffage assuré par l'excédent de la chaleur fournie par l'adsorbant,

d) introduction dans l'enceinte du liquide qui s'écoule sur ledit dispositif,

e) maintien de la pression totale de l'enceinte à une valeur comprise entre 7 et 50 millibars,

f) arrêt du dispositif suivant la teneur en concentration du liquide et/ou la teneur en déshydratation et/ou la suppression d'au moins un constituant dudit liquide.

De façon préférentielle, le procédé est caractérisé en ce que le chauffage dudit dispositif est réalisé à partir du dispositif d'adsorption, conformément à la cartouche du dispositif de refroidissement selon le brevet FR-A-2 489 101.

D'une façon avantageuse, ledit liquide peut être concentré jusqu'à ce qu'il se transforme en produit solide.

D'une autre façon avantageuse, l'adsorbant est choisi de façon à n'adsorber que l'eau ou, d'une autre façon, l'alcool. Ce choix est fonction de la dimension de la zéolithe par rapport aux dimensions des molécules de l'eau ou de l'alcool.

Avantageusement, ledit dispositif sur lequel s'écoule le liquide est constitué d'au moins un cône et/ou d'au moins un plateau incliné.

Le procédé peut donc fonctionner en continu dans l'hypothèse de plusieurs cônes disposés par exemple en série.

Pour la mise en oeuvre du procédé ci-dessus décrit, le dispositif de déshydratation, de concentration et/ou de suppression d'au moins un constituant de liquide alimentaire, comportant une enceinte, destinée à recevoir ledit liquide, à laquelle sont éventuellement associés des moyens pour faire le vide dans cette enceinte, est caractérisé en ce que ladite enceinte comporte en outre à l'intérieur un dispositif qui est chauffé directement par une canalisation d'un circuit, dans laquelle circule un fluide caloporteur provenant d'un dispositif d'adsorption indépendant de l'enceinte.

De façon avantageuse, ledit dispositif sur lequel s'écoule le liquide est constitué d'au moins un cône et/ou d'au moins un plateau incliné, de façon à permettre une déshydratation en continu dans le cas d'une disposition d'une série de cônes.

De façon préférentielle, ledit dispositif d'adsorption contient de la zéolithe conformément à la cartouche du dispositif de refroidissment selon le brevet FR-A-2 489 101.

La présente invention concerne également le produit concentré, déshydraté et/ou ne contenant plus au moins un constituant de liquide alimentaire ou autre, à partir du procédé mis en oeuvre au moyen du dispositif ci-dessus décrit.

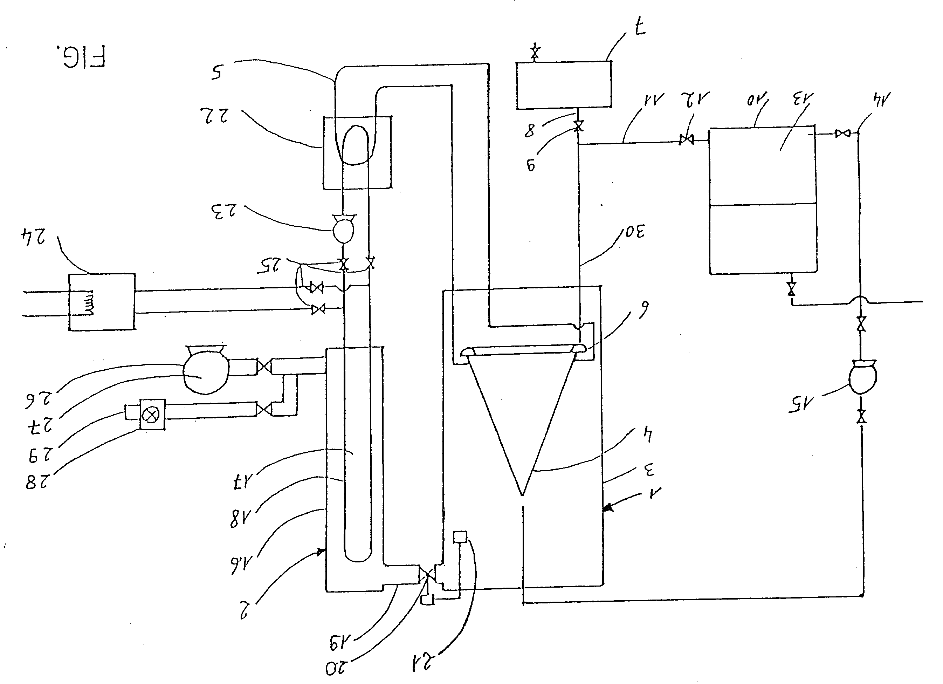

Les autres caractéristiques et avantages de l'invention résulteront de la description qui suit en référence à la figure annexée qui est une vue très schématique d'une forme d'exécution non limitative d'un dispositif selon l'invention, représentant les différents appareils ouverts.

Selon l'invention, il est proposé un procédé de déshydratation et un dispositif pour la mise en oeuvre de ce procédé.

L'invention s'applique à un produit végétal qui perd au moins une partie de l'eau qu'il contient initialement, sans aucun préjudice pour ses qualités substantielles.

La présente invention va être maintenant décrite à partir de la figure unique du dessin annexé illustrant un exemple de réalisation. Sur cette figure, des références identiques désignent des éléments semblables.

Le procédé est mis en oeuvre dans un dispositif de déshydratation comportant une enceinte 1 dans laquelle sont introduits les liquides à déshydrater, un dispositif d'adsorption 2 extérieur à l'enceinte 1 et de nombreux moyens techniques permettant de réaliser les différentes étapes du procédé de déshydratation.

L'enceinte 1 est constituée d'un bâti 3 étanche, de moyens d'introduction et d'évacuation des produits à déshydrater, moyens étanches, de moyens de visualisation, de contrôle et de sécurité. Ces moyens ne sont pas représentés sur le dessin.

A l'intérieur de l'enceinte 1 est disposé un cône 4 creux conçu de façon à être parcouru par un fluide caloporteur provenant du circuit 5. Il s'agit de préférence de l'eau. Ce passage d'eau permet de chauffer le cône, comme cela sera décrit plus loin. A la base du cône 4 sont prévues des goulottes de récupération 6 du liquide déshydraté, comme cela est décrit plus loin. Le produit récupéré est soit envoyé dans un réservoir de stockage 7 par le biais des canalisations 30 et 8, cette dernière comportant une soupape 9, soit envoyé dans un réservoir d'alimentation 10 via les canalisations 30 et 11, cette dernière étant munie d'une soupape 12. Le réservoir d'alimentation 10 contient le liquide 13 à déshydrater. Le liquide est introduit dans l'enceinte 1 via une canalisation 14 et une pompe de circulation 15.

Le dispositif d'adsorption 2 est constitué d'une cartouche 16 étanche dans laquelle est placé un adsorbant 17. Ce dispositif d'adsorption 2 est indépendant et extérieur à l'enceinte 1.

L'adsorbant 17 peut être un corps de préférence solide dont le rôle est d'adsorber la vapeur d'eau des produits traités. L'adsorbant 17 peut être régénéré par extraction de la vapeur d'eau adsorbée. Il s'agit de préférence de zéolithes. Un circuit de fluide 18 caloporteur, de préférence de l'huile, est disposé dans la cartouche 16, destiné à la refroidir pendant le fonctionnement du dispositif.

L'enceinte 1 est reliée au dispositif d'adsorption 2 au moyen d'une tubulure 19 qui peut être constituée de plusieurs raccords, non représentée sur la figure. Sur cette tubulure 19 est disposée une vanne 20, présentant un rôle d'arrêt et de régulation. Lorsqu'elle joue le rôle de régulation, elle est associée à une mesure de pression totale 21 de l'enceinte 1 permettant ainsi de maintenir dans l'enceinte 1 la pression totale désirée. Elle est de préférence à commande automatique mais peut être aussi commandée manuellement.

Le dispositif d'adsorption 2 comprend un circuit d'huile 18 qui n'est pas relié directement au circuit de la canalisation d'eau 5. Lors du fonctionnement du dispositif, l'huile du circuit 18 est chaude, ce qui permet de chauffer, par l'intermédiaire d'un échangeur à paroi 22, l'eau de la canalisation 5. L'huile chaude va donc chauffer l'eau par simple échange thermique. L'huile circule dans le circuit 18 grâce à une pompe de circulation 23 permettant d'assurer soit la circulation d'huile chaude provenant de la chaudière 24, soit le refroidissement de l'huile chaude grâce au jeu de vannes 25.

L'enceinte 1 est reliée à des moyens de dépression 26 comportant une pompe à vide 27, des moyens d'extraction 28 et des moyens de stockage 29 par un système de canalisations et de vannes, et par l'intermédiaire de la cartouche 16.

Ces spécificités techniques sont décrites de façon précise dans le brevet FR 2 489 101.

Le dispositif qui vient d'être décrit ci-dessus fonctionne de la manière suivante :

On introduit le liquide à déshydrater dans le réservoir d'alimentation 10, récipient mis sous vide, donc résistant au vide, et calorifugé. L'enceinte 1 et le dispositif d'adsorption 2 sont fermés. On fait le vide au moyen de la pompe à vide 27 dans l'enceinte 1 et le dispositif d'adsorption 2 jusqu'à atteindre une pression partielle d'air, comprise à l'intérieur de l'enceinte 1, entre 7 et 50 millibars tout en chauffant les parois du cône 4 d'abord au moyen de la chaudière 24, puis par l'adsorbant 17, qui est ici de la zéolithe. La température des parois du cône 4 est fonction du taux de concentration du liquide désiré. Le liquide à déshydrater 13 est projeté sur le sommet du cône 4 via la pompe 15 et la canalisation 14 et s'écoule sur ses parois. Le produit déshydraté est récupéré dans des goulottes de récupération 6. Il est alors dirigé par la canalisation 30 soit vers le réservoir de stockage 7 si le produit est déshydraté comme on le désire, soit vers le réservoir d'alimentation 10 et subit à nouveau la déshydratation.

La vapeur d'eau dégagée par cette déshydratation est évacuée par la canalisation 19 dans le dispositif d'adsorption 2, la vanne 20 étant ouverte. L'adsorbant 17 joue son rôle de fixateur de la vapeur d'eau provenant de l'enceinte 1 et par conséquent chauffe. Le circuit d'huile 18 est disposé en partie à l'extérieur du dispositif d'adsorption 2. L'huile froide va se réchauffer au contact de la zéolithe chaude qui va ensuite chauffer l'eau du circuit 5 par l'intermédiaire de l'échangeur à paroi 13. Cette eau va chauffer les parois du cône 4. Ce mode de chauffage prend le relai du chauffage provenant de la chaudière 24.

La mesure de la pression totale de l'enceinte 1, permettant de connaître la pression totale de l'enceinte 1, agit sur la vanne 20. Elle est ouverte quand la pression totale désirée de l'enceinte 1 n'est pas atteinte et, inversement, elle est fermée lorsque cette pression totale désirée est dépassée. La pression totale est comprise entre 7 et 50 millibars.

Une fois l'opération terminée, on arrête le fonctionnement du dispositif et on le met à la pression atmosphérique.

Des exemples selon l'invention ont été réalisés au moyen du procédé et du dispositif ci-dessus décrits.

Exemple 1 : Concentration de moût de raisin.

Pour améliorer le degré alcoolique d'un moût de raisin, ou pour le concentrer, dans le cas d'un raisin dit "colorant", on introduit, dans le réservoir d'alimentation 10, 20 litres de moût de raisin récupérés à la sortie des pressoirs. Le réservoir d'alimentation 10 ainsi que l'enceinte 1 et le dispositif d'adsorption 2 sont fermés et mis sous vide à une pression partielle d'air de 1 mbar. Le moût de raisin est mis en circulation dans le dispositif de déshydratation au moyen de la pompe de circulation 15. Lors de l'introduction du moût sur le cône 4 de l'enceinte 1, on règle la vanne 20 pour que la pression totale de l'enceinte 1 soit maintenue entre 10 et 15 mbar automatiquement à l'aide de la mesure de la pression totale 21. On règle le débit de moût sur le cône 4, lequel débit est de 1 l/min. La surface d'évaporation chauffée du cône 4 est de 20 dm$^2$ et la température de ce dernier est de 25°C.

Après projection de toute la quantité de mont contenue dans le réservoir d'alimentation 10 sur le cône 4, on concentre le moût de façon à récupérer dans les goulottes de récupération 6 un volume de moût ramené à 15 l et ceci en 20 mn de fonctionnement.

Exemple 2 : Déshydratation d'une solution contenant des levures vivantes.

On introduit 3 litres d'une solution contenant des levures vivantes à 50 % de matières sèches dans le réservoir d'alimentation 10. Les opérations techniques sont identiques à celles de l'exemple 1 et de la description précédente. On règle le débit de projection de la solution sur le cône 4 à 100 cm$^3$/min. La pression partielle d'air de l'enceinte 1 est de 1 mbar.

Pendant la mise en oeuvre du procédé, la pression totale de l'enceinte est maintenue entre 10 et 15 mbar.

En fin de procédé, on récupère une poudre dans les goulettes de récupération 6, poudre qui contient une humidité résiduelle comprise entre 6 et 7 %.

Les deux exemples décrits ci-dessus ne sont pas limitatifs et ne diminuent pas la portée de l'invention.

**Revendications**

1. Procédé de concentration, de déshydratation et/ou de suppression d'au moins un constituant de liquide alimentaire, caractérisé en ce qu'il comprend les étapes suivantes :

a) introduction du liquide à déshydrater (13) dans un réservoir d'alimentation (10) résistant au vide et calorifugé,

b) mise sous basse pression de l'enceinte (1) et du dispositif d'adsorption (2) comportant des moyens de chauffage et de refroidissement où est mis en oeuvre le procédé de l'invention à une pression partielle d'air comprise entre 1 et 5 millibars,

c) chauffage d'au moins un dispositif (4), disposé à l'intérieur de ladite enceinte (1), sur lequel va s'écouler ledit liquide à déshydrater (13), chauffage assuré par l'excédent de la chaleur fournie par l'adsorbant (17),

d) introduction dans l'enceinte (1) du liquide (13) qui s'écoule sur ledit dispositif (4),

e) maintien de la pression totale de l'enceinte (1) à une valeur comprise entre 7 et 50 millibars,

f) arrêt du dispositif suivant la teneur en concentration du liquide et/ou la teneur en déshydratation et/ou la suppression d'au moins un constituant dudit liquide,

2. Procédé selon la revendication 1, caractérisé en ce

8. Dispositif selon la revendication 7, caractérisé en ce que le dispositif (4) est constitué d'au moins un cône et/ ou d'au moins un plateau incliné.

9. Dispositif selon la revendication 7 ou 8, caractérisé en ce que le dispositif d'adsorption (2) contient de la zéolithe.

10. Produit concentré, déshydraté et/ou ne contenant plus au moins un constituant de liquide alimentaire ou autre, obtenu à partir du procédé selon l'une quelconque des revendications 1 à 6 et au moyen du dispositif selon l'une quelconque des revendications 7 à 9.

FIG.

Office européen
des brevets

**RAPPORT DE RECHERCHE EUROPEENNE**

Numero de la demande

EP 91 40 2108

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 414 940 (E.W. FLOSDORF et al.) * Figure 2; colonne 8, lignes 20-29; colonne 9, lignes 35-43 * | 1-4 | A 23 B 7/02<br>A 23 B 7/024<br>A 23 L 3/015<br>A 23 L 3/40<br>A 23 L 3/44 |
| Y | AU-B- 58 358 (J.D. MELLOR et al.)(1986) * Revendications 1-5; page 3, lignes 7-26; page 4, lignes 11-23; figures 2,1 * | 1-4 | |
| Y | FR-A-3 453 741 (C.J. KING et al.) * Colonne 3, lignes 66-74; figures 1,2; revendication 1 * | 1-4 | |
| A | FR-A-1 378 495 (E. HIGH VACUUM INTERNATIONAL LTD) * Page 1, colonne 2, alinéa 3; page 2, colonne 1, alinéa 5 * | 1,7,10 | |
| A | US-A-2 292 447 (J.C. IRWIN) * Brevet en entier * | 1,7 | DOMAINES TECHNIQUES RECHERCHES (Int. Cl.5) |
| A | FR-A-1 513 444 (CRYO-MAID INC.) * Figure 1; page 3, colonne 1, alinéas 3,4 * | 1,6,8 | A 23 L<br>A 23 B |
| A | EP-A-0 301 117 (H. STEINKAMP) | | |
| A | US-A-4 561 191 (M.C. PARKINSON) | | |
| A | FR-A- 868 776 (M.S.C. BOILEAU) | | |
| A | FR-A-2 489 101 (C. BLAIZAT) * Brevet en entier * | 1,2,5 | |
| A | US-A-3 909 957 (A.D. PASSEY) | | |

-/-

Le présent rapport a été établi pour toutes les revendications

| Lieu de la recherche | Date d'achèvement de la recherche | Examinateur |
|---|---|---|
| LA HAYE | 26-11-1991 | GUYON R.H. |

**Office européen des brevets**

# RAPPORT DE RECHERCHE EUROPEENNE

Numero de la demande

EP 91 40 2108

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 299 525 (E. THUSE)<br>----- | | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 26-11-1991 | GUYON R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)